# EUROPEAN PATENT APPLICATION

(11) **EP 2 879 362 A1**
(43) Date of publication of application: **03.06.2015**
(21) Application number: 13822803.6
(22) Date of filing: 23.07.2013
(51) Int. Cl.: H04M 3/00, H04M 11/00

(54) **COMMUNICATION SYSTEM, METHOD, AND PROGRAM**

(30) Priority: 24.07.2012 JP 2012163959
(71) Applicant: NEC Corporation, Tokyo 108-8001 (JP)
(72) Inventor: OZAWA, Kazunori, Tokyo 108-8001 (JP)
(74) Representative: Sieckmann, Dirk Christoph
(86) International application number: PCT/JP2013/069843
(87) International publication number: WO 2014/017455

(57) **Abstract**

Reduction of a delay at a virtual terminal that is caused when a terminal accesses a server apparatus via a network and makes a voice call with a communication partner terminal through the server apparatus is enabled, thereby achieving improvement in comfortability in the voice call communication. A server apparatus (110) configured to provide a virtual terminal function to a terminal (170_1) receives an operation signal or a packet from the terminal (170_1). When the server apparatus (110) determines that a voice call is made, the server apparatus relays a packet having voice data stored therein and transmitted from the terminal (170_1) to a communication partner terminal (170_2), without going through a virtual client unit that functions as the virtual terminal.

## Description

### [Technical Field]

### (Reference to Related Application)

This application is based upon and claims the benefit of the priority of Japanese Patent Application No. 2012-163959 filed on July 24, 2012, the disclosure of which is incorporated herein in its entirety by reference thereto.
The present invention relates to a communication system, a method, and a program.

### [Background]

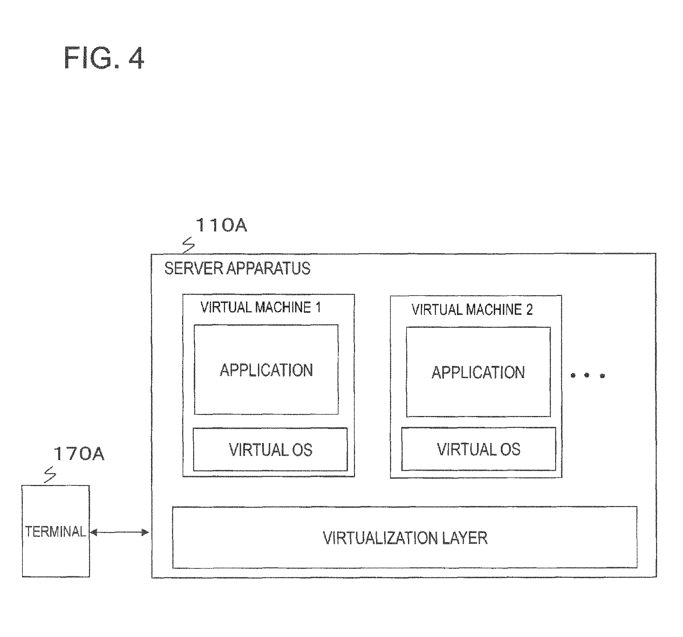

A thin client system has begun to be in wide spread use in enterprises and so forth in order to ensure advanced security. There are various types of implementation of the thin client system. A system using virtual machines as illustrated in Fig. 4, for example, is known. The virtual machines (also referred to as "virtual terminals" or "virtual clients") are provided on a virtualization layer, for example, in a server apparatus 110A. Then, a virtual OS (Operating System) (also referred to as a "client OS") and an application are executed on each virtual machine.

A terminal 170A connects for communication to the server apparatus 110A via a network, and operates a virtual terminal on the server apparatus 110A to make an application run, as if to operate a real terminal, thereby generating, for example, screen information. The application on the virtual terminal transmits the screen information to the terminal 170A and displays the screen information on a display device of the terminal 170A. The terminal A in such a system is also referred to as a thin client terminal. Connection to the virtual terminal (virtualized version of the terminal 170A) on the server apparatus 110A can be made, based on a log-in ID and terminal identification information from the terminal 170A, and an access to the server apparatus can be made from the terminal 170A at home or outside the home, and connection to the virtual terminal of its own (terminal 170A) can be safely made to execute an operation. Since no data is left in the terminal 170A, confidential information and enterprise information do not leak to an outside, even if a user has lost the terminal 170A, for example.

The following Patent Literatures 1 to 3 have been searched in the prior document search with regards to the present application. For example, Patent Literature 1 discloses an information communication apparatus in which, as voice processing in a thin client system, a response signal including a voice response signal for an E-mail message received at a thin client terminal for communication is transmitted to a transmitter of the E-mail message through a communication network. The system includes: a conversion mechanism provided at a communication relay point for a thin client terminal to convert a voice response signal into a voice data file to be transmitted to a communication network; an E-mail server connected to the communication network to receive an E-mail and a voice data file; identification means to identify the voice data file from the response signal; and a voice mail system including: a voice mail interface to receive the voice data file from the identification means and to convert the voice data file into a voice stream; and a voice mail box of the receiver, wherein the voice mail system is provided to transmit the voice stream to the voice mail box of the receiver. This system enables transmission of a voice response signal, as a response to the E mail message, from the thin client terminal for communication to the voice mail box of the receiver via the voice data file and using the voice stream, thereby transmitting the voice response signal to the receiver. With respect to VoIP (Voice Over IP) by which a voice exchange over an IP (Internet Protocol) network is made, Patent Literature 2 discloses a configuration in which a connection request transmitted from a telephone terminal is transmitted to one of the IP network or a PSTN (Public Switched Network), based on a telephone number of a call recipient included in the connection request and information stored in a VoIP gateway. In this configuration, when communication through the IP network is determined to be impossible, the connection request, in which transmission to the IP network is determined, is transmitted to the PSTN. Patent Literature 3 discloses a configuration in which an accessory for electronic equipment includes an interface and a VoIP circuit. The interface is provided to exchange data between the electronic equipment and the accessory. The VoIP circuit is configured to implement at least a portion of VoIP in the electronic equipment or the accessory. Patent Literatures 1 to 3 do not disclose an arrangement for solving a processing delay of a voice call in a virtual machine type thin client system.

### [Citation List]

### [Patent Literature]

[PTL 1]
   JP Patent Kokai Publication No. JP2000-278439A
[PTL 2]
   International Publication No. WO2003/103259 pamphlet (WO2003/103259)
[PTL 3]
   JP Patent Kohyo Publication No. JP2009-518920A

### [Summary]

### [Technical Problem]

An analysis of the related arts will be given below.

A problem of a remote-type mobile communication system will be studied. In this system, a remote access is made to a server apparatus through the network to allow a voice call between a terminal and a communication partner terminal.

When the terminal is going to make a voice call using VoIP (Voice Over IP: voice exchange over the IP (Internet Protocol) network) through a server apparatus by a thin client scheme, there is a problem that a delay drastically increases, compared with an ordinary VoIP that does not use a thin client system. This is because, in the thin client system, a voice data packet obtained by performing compression encoding of a voice signal and transmitted by the real terminal (thin client terminal) is received at a virtual terminal (virtual client unit) of the server apparatus, and on the virtual terminal (virtual client unit), the processing, such as:
- decoding of voice data,
- re-encoding of the voice data,
- re-packetizing the voice data, and so forth,
are executed.

In the VoIP in the thin client system, a delay caused by each processing on the virtual terminal (virtual client unit) on the server apparatus is added, in this manner. An end-to-end total delay may therefore drastically increase to be one second or more, for example. Consequently, a trouble may occur in the voice call.

Accordingly, the present invention has been devised in view of the above-mentioned problem. An object of the invention is to provide a communication system, a server apparatus, a method, and a program that can reduce a processing delay caused at a virtual terminal, when a voice call is made between a terminal and a communication partner terminal through a server apparatus after an access to the server apparatus by the terminal via a network, thereby improving comfortability in a voice call.

### [Solution to Problem]

According to the present invention, there is provided a communication system comprising:
a terminal; and
a server apparatus that connects via a network to the terminal, and responsive to an operation on the terminal, transfers to the terminal, information obtained by making an application work on a virtual client adapted to function as a virtual terminal of the terminal, wherein the server apparatus comprises:
a control unit that receives an operation signal or a packet from the terminal and determines, based on the operation signal or the packet, whether or not a voice call is made; and
a relay unit that relays a packet having voice data stored therein and received from the terminal to a communication partner terminal, without going through the virtual client, based on an instruction supplied thereto from the control unit when the control unit determines that a voice call is made.

According to the present invention, there is provided a server apparatus that connects via a network to a terminal and responsive to an operation on the terminal, transfers to the terminal, information obtained by making an application work on a virtual client adapted to function as a virtual terminal of the terminal, wherein the server apparatus comprises:
a control unit that receives an operation signal or a packet from the terminal and determines, based on the operation signal or the packet, whether or not a voice call is made; and
a relay unit that relays a packet having voice data stored therein and received from the terminal to a communication partner terminal, without going through the virtual client, based on an instruction supplied thereto from the control unit when the control unit determines that a voice call is made.

According to the present invention, there is provided a program for a computer forming a server apparatus that connects to a terminal via a network and responsive to an operation on the terminal, transfers to the terminal, information obtained by making an application work on a virtual client adapted to function as a virtual terminal of the terminal, the program causing the computer to execute the processing comprising:
on reception of an operation signal or a packet from the terminal, determining, based on the operation signal or the packet, whether or not a voice call is made; and
relaying a packet having voice data stored therein and received from the terminal to a communication partner terminal, without going through the virtual client, based on an instruction supplied from the control unit when it is determined that a voice call is made.

According to the present invention, there is provided a communication method by a server apparatus that connects to a terminal via a network and responsive to an operation on the terminal, transfers to the terminal, information obtained by making an application work on a virtual client adapted to function as a virtual terminal of the terminal, the method comprising:
on reception of an operation signal or a packet by the server apparatus from the terminal, determining, based on the operation signal or the packet, whether or not a voice call is made; and
relaying a packet having voice data stored therein and received from the terminal to a communication partner terminal, without going through the virtual client, based on an instruction supplied from the control unit when it is determined that a voice call is made.

### [Advantageous Effects of Invention]

According to the present invention, it is possible to reduce a processing delay at a virtual terminal caused when a terminal accesses a server apparatus through a network and makes a voice call with a communication partner terminal through the server apparatus and to improve comfortability in a voice call.

### [Brief Description of Drawings]

[Fig. 1]

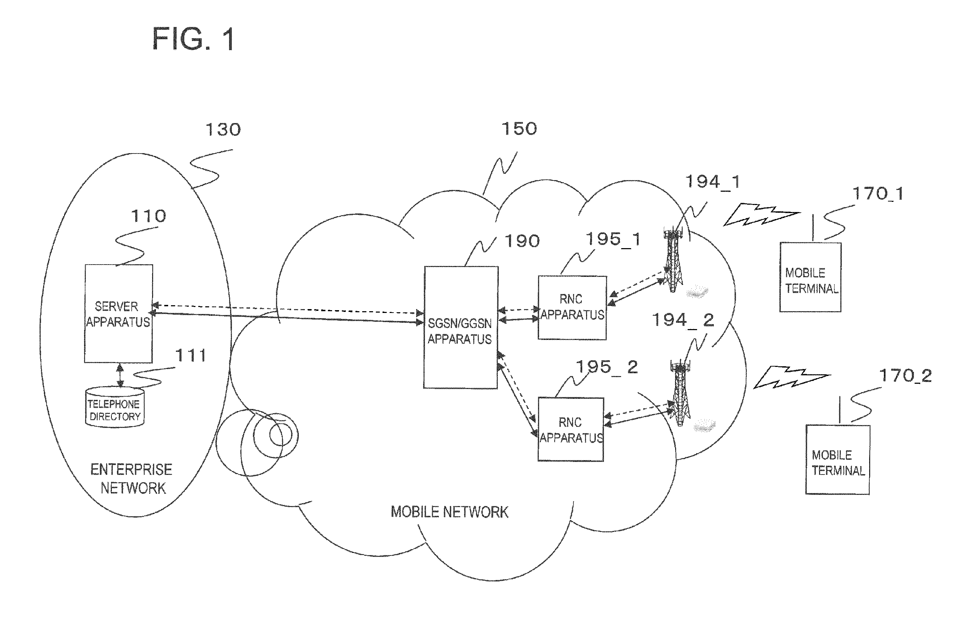

   Fig. 1 is a diagram illustrating a connection configuration in a first exemplary embodiment of the present invention.
[Fig. 2]

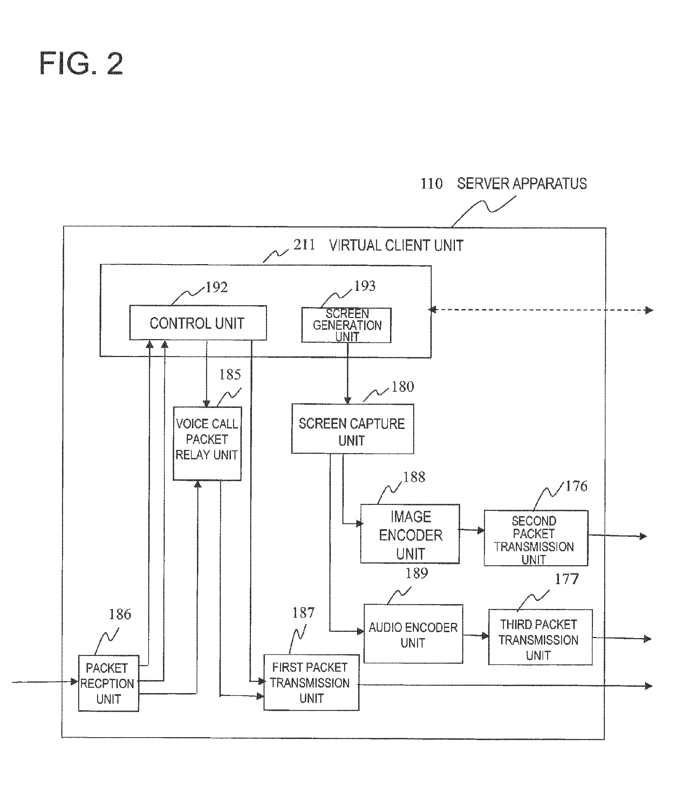

   Fig. 2 is a diagram illustrating a configuration of a server apparatus in the first exemplary embodiment of the present invention.
[Fig. 3]

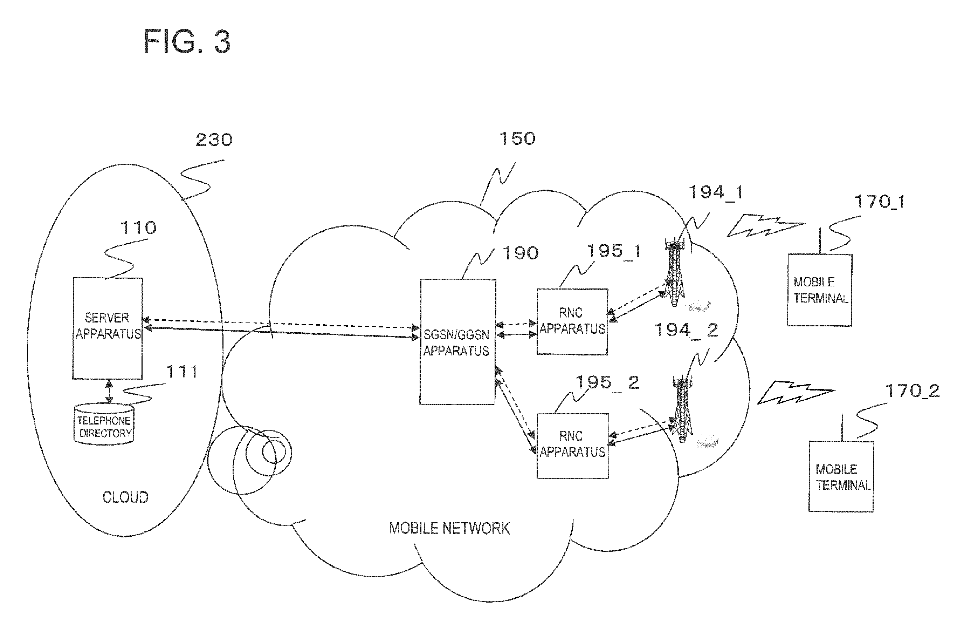

   Fig. 3 is a diagram illustrating a connection configuration in a second exemplary embodiment of the present invention.
[Fig. 4]
   Fig. 4 is a diagram explaining a virtual-machine type thin client system.

### [Description of Embodiments]

Exemplary embodiments of the present invention will be described with reference to the drawings.

### <First Exemplary Embodiment>

Fig. 1 is a diagram illustrating a configuration in a first exemplary embodiment of the present invention. Fig. 1 illustrates the configuration in which a mobile 3G packet network is used as a network and an SGSN (Serving GPRS (General Packet Radio Service) Support Node)/GGSN (Gateway GPRS Support Node) apparatus is used as a packet forwarding apparatus, though not limited thereto. Referring to Fig. 1, the SGSN/GGSN apparatus 190 indicates an apparatus in which an SGSN apparatus and a GGSN apparatus are integrated in one unit.

Fig. 1 illustrates a case where, while a terminal (mobile terminal) 170_1 connects to a server apparatus 110 installed on an enterprise network 130 to perform data transfer under a thin client, the mobile terminal 170_1 makes a voice call to a mobile terminal 170_2 using the server apparatus 110. A telephone directory 111 necessary for making a phone call is held by the server apparatus 110 in a thin client system. A user name and a telephone number are registered in the telephone directory 111 of the server apparatus 110. The mobile terminals (170_1, 170_2) do not each need to hold a telephone directory. Consequently, security for telephone number, user name, and the like can be ensured, when the mobile terminal is lost.

The mobile terminal 170_1, after connecting to the server apparatus 110 to initiate a voice call, invokes a voice call VoIP application on a virtual terminal (that is not shown in Fig. 1, but corresponds to a virtual machine in Fig. 4) provided in the server apparatus 110. Screen data generated by the voice call VoIP application is transferred from the server apparatus 110 to the mobile terminal 170_1, and the mobile terminal 170_1 decodes the screen data to display the decoded screen data on a display device (not shown) of the mobile terminal 170_1. A user makes a voice call from the mobile terminal 170_1 to the mobile terminal 170_2, while viewing a screen displayed on the display device (not shown) of the mobile terminal 170_1. When the mobile terminal 170_1 performs an operation for invoking the voice call VoIP application on the virtual terminal (not shown) of the server apparatus 110 in order to initiate the voice call, a packet storing an operation signal for invoking the voice call VoIP application is transmitted from the mobile terminal 170_1 to the server apparatus 110. The operation signal herein refers to a signal transmitted from the mobile terminal 170_1, when a user doing a key input operation, a touch operation on a screen, a character input operation or the like, on the mobile terminal 170_1.

When the server apparatus 110 receives from the mobile terminal 170_1, a packet storing the operation signal, a control unit (192 in Fig. 2) of the server apparatus 110 determines that a voice call is made. Then, the control unit causes a voice call VoIP application (corresponding to an application in Fig. 4) to be invoked on the virtual terminal. The voice call VoIP application, when invoked, generates screen information, encodes the screen information, and transfers the encoded screen information from the server apparatus 110 to the mobile terminal 170_1.

The mobile terminal 170_1 decodes the screen information, and then displays the screen information on a display device (not shown) of the mobile terminal 170_1. Then, an operation of selecting a user name and a telephone number of a voice call communication partner is performed on the mobile terminal 170_1.

When the screen information transferred from the server apparatus 110 to the mobile terminal 170_1 is also accompanied with an audio signal, the audio signal accompanying the screen information is processed through a path different from a path for the voice call. That is, after the audio signal is captured by a screen capture unit (180 in Fig. 2) in the server apparatus 110, the audio signal is compression encoded into a compression encoded stream by an audio encoder unit (189 in Fig. 2) and is then transmitted with a predetermined protocol to the mobile terminal 170_1 as a packet that is different from a packet for a voice call.

Then, a packet that stores a session control message in accordance with a known session control protocol is stored, and a packet that stores a bit stream obtained by performing compression encoding of a voice signal by the mobile terminal 170_1 are transmitted from the mobile terminal 170_1. In this exemplary embodiment, SIP (Session Initiation Protocol) to generate, change, and disconnect a session between terminals, is used as the session control protocol. The session control protocol is not limited to SIP, and other known protocol may be used.

These packets arrive at a base station 194_1 on a mobile network 150 in a service area, and further arrive at the server apparatus 110 on the enterprise network 130 through an RNC (Radio Network Controller) apparatus 195_1 and the SGSN/GGSN apparatus 190. Though the SGSN/GGSN apparatus 190 in Fig.1 is set to have an integrated configuration, a configuration may be of course employed in which the SGSN apparatus and the GGSN apparatus are separately disposed.

Fig. 2 is a diagram illustrating a configuration of the server apparatus 110. Referring to Fig. 2, the server apparatus 110 includes a virtual client unit 211, a packet reception unit 186, a voice call packet relay unit 185, a screen capture unit 180, an image encoder unit 188, an audio encoder unit 189, a first packet transmission unit 187, a second packet transmission unit 176, and a third packet transmission unit 177. The virtual client unit 211 operates on a guest OS (virtual OS) of each virtual machine provided on a virtualization layer on a host OS. Known OSs can be used for the host OS and the guest OS. Hereinafter, it is assumed, as an example, that Linux (registered trademark) is used for the host OS and Android (registered trademark) is used for the guest OS. However, other OSs such as Windows (registered trademark) for the latter guest OS can also be used. The virtualization mechanism is not limited to a host OS type in which virtualization software is installed on a designated host OS and a virtual machine is operated on the virtualization software. The virtualization mechanism may be configured with a hypervisor type that does not need a host OS.

The virtual client unit 211 includes a control unit 192 and a screen generation unit 193.

The mobile terminal 170_1 transmits the operation signal packet that stores the operation signal for invoking a voice call VoIP application software on the virtual terminal in order to start the voice call. The packet reception unit 186 of the server apparatus 110 receives the operation signal packet, extracts the operation signal, and then sends the extracted operation signal to the control unit 192 of the virtual client unit 211.

The control unit 192 receives the operation signal. When the control unit 192 determines that a voice call is made, the control unit 192 causes the voice call VoIP application software to work. Screen information for performing screen display for an end user (mobile terminal 170_1) is generated by execution of the voice call VoIP application software. The screen generation unit 193 generates a screen using the screen information and outputs the screen to the screen capture unit 180.

The screen capture unit 180 captures the screen generated by the screen generation unit 193 with a predetermined screen resolution and a predetermined frame rate (the number of frames per second), and outputs the captured screen to the image encoder unit 188.

The image encoder unit 188 performs compression encoding of the received screen with a predetermined screen resolution, a predetermined bit rate, and a predetermined frame rate, using a predetermined encoder to obtain a compression encoded stream, and then outputs the compression encoded stream to the second packet transmission unit 176. Herein, a known compression encoding scheme such as H. 264, MPEG (Moving Picture Experts Group)-4, or JPEG (Joint Photographic Experts Group) 2000 can be used, as a compression encoding scheme.

The second packet transmission unit 176 stores the compression encoded stream received from the image encoder unit 188 in a predetermined packet, and outputs the packet to the SGSN/GGSN apparatus 190 (see Fig. 1). A protocol for the packet may be RTP (Real-time Transport Protocol)/UDP (User Data Protocol)/IP (Internet Protocol), UDP/IP, or TCP (Transmission Control Protocol)/IP. It is assumed that, in this exemplary embodiment, UDP/IP is used, as an example.

Next, the mobile terminal 170_1 1 (see Fig. 1) receives the compression encoded stream for the screen sent from the server apparatus 110 to the SGSN/GGSN apparatus 190, decodes the compression encoded stream with a predetermined screen resolution and a predetermined frame rate, and then displays the decoded stream on the display device (not shown in Fig. 1) of the mobile terminal 170_1.

Next, the virtual client unit (virtual terminal) 211 reads a telephone number of a communication partner (telephone number of the mobile terminal 170_2 (see Fig. 1) in this case) and a user name, and then transmits the telephone number and user name to the mobile terminal 170_1 (see Fig. 1), as the screen information.

The user of the mobile terminal 170_1 selects a user name and a telephone number on the screen while viewing this screen on the display device (not shown in Fig. 1) of the mobile terminal 170_1. When the user starts a call, the mobile terminal 170_1 transmits a packet that stores a SIP message to the server apparatus 110. Then, the mobile terminal 170_1 transmits to the server apparatus 110, a packet that stores a stream obtained by compression encoding of a voice signal.

The server apparatus 110 processes the packet of the voice call from the mobile terminal 170_1 using the different path from the path of an audio accompanying the screen, thereby reducing a processing delay. In the case of voice call, out of packets received from the mobile terminal 170_1 (see Fig. 1), the packet reception unit 186 of the server apparatus 110 outputs the packets in the following manner:
- The packet reception unit 186 outputs the packet having a SIP message stored therein to the control unit 192 of the virtual client unit 211;
- The packet reception unit 186 outputs to the voice call packet relay unit 185 a packet (packet of voice call) having a compression encoded stream for a voice stored therein. Herein, as a scheme for the compression encoding of the voice, a known compression encoding scheme such as G. 711, G. 711.1, G. 729, AMR_NB (Adaptive Multi-Rate Narrow Band), or AMR-WB (Adaptive Multi-Rate Wide Band) can be used.

Upon reception of the operation signal, the control unit 192 of the virtual client unit 211 performs the following operations:
(1) The control unit 192 of the virtual client unit 211 analyzes the operation signal from the mobile terminal 170_1 (in Fig. 1), and invokes an voice call VoIP application software as an application that runs on the virtual machine (virtual client unit 211);
(2) The control unit 192 of the virtual client unit 211 receives the SIP message from the packet reception unit 186;
(3) The control unit 192 of the virtual client unit 211 obtains from the VoIP application software the telephone number of the communication partner selected by an end user (user of the mobile terminal 170_1), obtains a destination IP address from the telephone number, rewrites a destination IP address of the received SIP message to the obtained IP address, and then notifies the SIP message and the rewritten destination IP address to the first packet transmission unit 187.
(4) The control unit 192 of the virtual client unit 211 issues to the voice call packet relay unit 185 an instruction to relay a packet having a compression encoded stream for a voice call stored therein, as it is.

The voice call packet relay unit 185 receives the packet having the compression encoded stream for the voice call stored therein and received at the packet reception unit 186 from the mobile terminal 170_1 (in Fig. 1), receives the instruction for the relay from the control unit 192 of the virtual client unit 211, relays the received packet without a processing delay at the virtual client unit 211 (without going through processing at the virtual client unit 211), and then outputs the received packet to the first packet transmission unit 187.

The first packet transmission unit 187 receives the destination IP address and the SIP message from the control unit 192 of the virtual client unit 21, and receives the packet having the compressing encoded stream for the voice call stored therein from the voice call packet relay unit 185. The first packet transmission unit 187 transmits the SIP message to the mobile terminal 170_2 (see Fig. 1) through the SGSN/GGSN apparatus 190 (see Fig. 1) and so forth. The voice call packet relay unit 185 changes a protocol for the packet having the compression encoded stream stored therein, if necessary, and then transmits the packet to the mobile terminal 170_2 (see Fig. 1) through the SGSN/GGSN apparatus 190 (see Fig. 1) and so forth. As an example of changing a protocol, the protocol may be changed to a RTP/UDP/IP protocol or a UDP/IP protocol, and further to a TCP/IP protocol in some cases. Referring to Fig. 1, the SGSN/GGSN apparatus 190 forwards the packet received from the server apparatus 110 to an RNC apparatus 195_2 by tunneling using a GTP (GPRS Tunneling Protocol)-U protocol, for example. Then, the RNC apparatus 195_2 transmits the packet to the mobile terminal 170_2 through a base station 194_2 over a radio.

In the first exemplary embodiment, the description has been given, using the mobile 3G network as an example of the mobile network 150. However, a mobile LTE (Long Term Evolution) network may be used as the mobile network 150. Alternatively, a fixed net network, a wireless LAN (Local Area Network) network, such as a WiFi (Wireless Fidelity), an NGN (Next Generation Network) network, a W-LAN network, an Internet network, or the like may also used as the mobile network 150.

Further, a fixed terminal (such as a personal computer (PC)) may be used in place of each mobile terminal. In this case, the server apparatus 110 includes a virtual PC obtained by virtualizing a PC as a virtual terminal, as each virtual machine.

Referring to Fig. 2, the description has been given about the configuration in which the screen generated by invoking the application (voice call VoIP application software) by the virtual client unit 211 of the server apparatus 110 is captured by the screen capture unit 180, the captured screen is compression encoded by the image encoder unit 188, the compression encoded screen is packetized by the second packet transmission unit 176 and is transmitted to the mobile terminal, and the packet is decoded by the mobile terminal to display the screen. It may also be so arranged that the server apparatus 110 transmits to the mobile terminal a drawing command to draw the screen, and the mobile terminal receives the drawing command to draw and display the screen using the drawing command, instead of the server apparatus 110 performing compression encoding a screen to transmit the encoded screen to the mobile terminal.

With respect to also a packet from the destination mobile terminal 170_2, in which a compression encoded stream for the voice call is stored, the voice call packet relay unit 185 in the server apparatus 110 receives an instruction for relay from the control unit 192 (in Fig. 2) and relays the packet without delay. Then, the packet is transmitted from the first packet transmission unit 187 to the mobile terminal 170_1 (see Fig. 1).

Functions and processings of the virtual client unit 211 of the server apparatus 110 and each unit in this exemplary embodiment may be implemented by a program executed by the server apparatus 110. A storage medium having the program recorded thereon, such as a semiconductor memory device (programmable nonvolatile memory) or a magnetic/optical disk is provided. In this case, by installing the program into the server apparatus 110 and executing the program, the exemplary embodiment is implemented.

### <Second Exemplary Embodiment>

Fig. 3 is a diagram illustrating a configuration of a second exemplary embodiment. Referring to Fig. 3, the arrangement is such that the server apparatus 110 is disposed on a cloud 230, and the mobile terminal (170_1, for example) connects to the server apparatus 110 through the mobile network 150. The cloud (cloud network) 230 may be an IP-VPN (Virtual Private Network: virtual facility network) that provides a network infrastructure for cloud computing, and is constructed by using the Internet, by connecting IP networks, or the like. With respect to server resources, storage resources, and so forth, improvement in use efficiency of the resources between users, ensurement of security by resource separation, and so forth are performed by using a virtualization technology. Same reference signs are assigned to elements in Fig. 3 that are the same as or equivalent to the elements in Fig. 1. Since the elements that are the same as or equivalent to the elements in Fig. 1 perform the same functions as the elements in Fig. 1, description of these elements will be omitted.

Referring to Fig. 3, a mobile LTE network may be used in place of the mobile network 150. Alternatively, a fixed net network, an NGN network, a W-LAN network, or an Internet network may be used. Further, a fixed terminal may be used in place of each mobile terminal.

The description has been given, with reference to Fig.3, about the configuration in which the screen generated by starting the application by the virtual client unit of the server apparatus 110 is captured, the captured screen is compression encoded by the image encoder, the compression encoded screen is packetized by the second packet transmission unit 176 and is transmitted to the mobile terminal, and the packet is decoded by the mobile terminal to display the screen. It may also be so configured in this exemplary embodiment that a drawing command to draw a screen is transmitted to the mobile terminal, and the mobile terminal receives the drawing command to draw and display the screen using the drawing command, instead of compression encoding a screen for transmission to the mobile terminal.

According to each exemplary embodiment mentioned above, a problem can be solved that, when trying to make a voice call by VoIP using a thin client system, a delay drastically increases compared with ordinary VoIP without using a thin client system. This is achieved because a server apparatus receives from a terminal an operation signal or a packet, determines whether or not a communication performed by the terminal is a voice call, and when it is determined that a voice call is made, the server apparatus can relay a packet having voice data stored therein and transmitted from the terminal to transmit the packet to a communication partner with very little delay.

The following is a supplementary explanation of a difference between each of the exemplary embodiments and the Patent Literatures. In each of the exemplary embodiments, the server apparatus (server in a thin client system) receives an operation signal or a packet from a terminal, and when it is determined that the communication performed is a voice call, the server apparatus transmits, to a communication party, a packet having voice data stored therein and transmitted from the terminal, by relaying the packet as it is. Such an arrangement is not disclosed in Patent Literatures 1 to 3.

Each disclosure of the above-listed Patent Literatures is incorporated herein by reference. Modification and adjustment of each exemplary embodiment and each example are possible within the scope of the overall disclosure (including the claims) of the present invention and based on the basic technical concept of the present invention. Various combinations and selections of various disclosed elements (including each element in each claim, each element in each example, each element in each drawing, and the like) are possible within the scope of the claims of the present invention. That is, the present invention naturally includes various variations and modifications that could be made by those skilled in the art according to the overall disclosure including the claims and the technical concept.

### [Reference Signs List]

- 110, 110A: server apparatus
- 111: telephone directory
- 130: enterprise network
- 150: mobile network
- 170_1, 170_2, 170A: terminal (mobile terminal)
- 176: second packet transmission unit
- 177: third packet transmission unit
- 180: screen capture unit
- 185: voice call packet relay unit
- 186: packet reception unit
- 187: first packet transmission unit
- 188: image encoder unit
- 189: audio encoder unit
- 190: SGSN/GGSN apparatus
- 192: control unit
- 193: screen generation unit
- 194_1, 194-2: base station
- 195_1, 195_2: RNC apparatus
- 211: virtual client unit
- 230: cloud network

## Claims

1. A communication system comprising:
a terminal; and
a server apparatus that connects via a network to the terminal, and responsive to an operation on the terminal, transfers to the terminal, information obtained by making an application work on a virtual client adapted to function as a virtual terminal of the terminal, wherein the server apparatus comprises:
a control unit that receives an operation signal or a packet from the terminal and determines, based on the operation signal or the packet, whether or not a voice call is made; and
a relay unit that relays a packet having voice data stored therein and received from the terminal to a communication partner terminal, without going through the virtual client, based on an instruction supplied thereto from the control unit when the control unit determines that a voice call is made.

2. A server apparatus that connects via a network to a terminal and responsive to an operation on the terminal, transfers to the terminal, information obtained by making an application work on a virtual client adapted to function as a virtual terminal of the terminal, wherein the server apparatus comprises:
a control unit that receives an operation signal or a packet from the terminal and determines, based on the operation signal or the packet, whether or not a voice call is made; and
a relay unit that relays a packet having voice data stored therein and received from the terminal to a communication partner terminal, without going through the virtual client, based on an instruction supplied thereto from the control unit when the control unit determines that a voice call is made.

3. The server apparatus according to claim 2, comprising:
a first packet transmission unit that transmits a packet having voice data stored therein and relayed thereto by the relay unit to the communication partner terminal;
a screen generation unit that generates a screen from information obtained by making a voice call application software work on the virtual client, when the control unit determines that a voice call is made; and
a second packet transmission unit that transmits a packet that stores data obtained by a first encoder that performs compression encoding of the generated screen.

4. The server apparatus according to claim 3, comprising:
a third packet transmission unit that transmits a packet that stores data obtained by a second encoder that performs compression encoding of an audio signal included in the generated screen.

5. The server apparatus according to claim 4, comprising:
a screen capture unit that captures the screen generated by the screen generation unit with a predetermined resolution and a predetermined frame rate to output the captured screen to each of the first and second encoders.

6. The server apparatus according to claim 3, wherein the virtual client includes the control unit and the screen generation unit.

7. A program for a computer forming a server apparatus that connects to a terminal via a network and responsive to an operation on the terminal, transfers to the terminal, information obtained by making an application work on a virtual client adapted to function as a virtual terminal of the terminal, the program causing the computer to execute the processing comprising:
on reception of an operation signal or a packet from the terminal, determining, based on the operation signal or the packet, whether or not a voice call is made; and
relaying a packet having voice data stored therein and received from the terminal to a communication partner terminal, without going through the virtual client, based on an instruction supplied from the control unit when it is determined that a voice call is made.

8. A communication method by a server apparatus that connects to a terminal via a network and responsive to an operation on the terminal, transfers to the terminal, information obtained by making an application work on a virtual client adapted to function as a virtual terminal of the terminal, the method comprising:
on reception of an operation signal or a packet by the server apparatus from the terminal, determining, based on the operation signal or the packet, whether or not a voice call is made; and
relaying a packet having voice data stored therein and received from the terminal to a communication partner terminal, without going through the virtual client, based on an instruction supplied from the control unit when it is determined that a voice call is made.

9. The communication method according to claim 8, comprising:
transmitting, from a first packet transmission unit, the relayed packet having the voice data stored therein;
generating a screen from information obtained by executing a voice call application software when it is determined that a voice call is made; and
transmitting, from a second packet transmission unit, a packet storing data obtained by a first encoder performing compression encoding of the generated screen.

10. The communication method according to claim 9, comprising:
transmitting, from a third packet transmission unit, a packet storing data obtained by a second encoder performing compression encoding of au audio signal, when the audio signal is included in the generated screen.
